# EUROPEAN PATENT SPECIFICATION

(11) **EP 4 067 457 B1**
(45) Date of publication and mention of the grant of the patent: **08.01.2025**
(21) Application number: 21199938.8
(22) Date of filing: 29.09.2021
(51) Int. Cl.: H01M 4/38, H01M 4/134, C01B 32/15, H01B 1/24, H01M 4/1395, H01M 4/62, H01M 4/66, H01M 10/42, H01M 10/0525, H01M 4/02

(54) **ANODE PLATE AND FABRICATION METHOD THEREOF, BATTERY CELL, BATTERY AND ELECTRONIC DEVICE**
ANODENPLATTE UND DEREN HERSTELLUNGSVERFAHREN, BATTERIEZELLE, BATTERIE UND ELEKTRONISCHE VORRICHTUNG
PLAQUE D'ANODE ET SON PROCÉDÉ DE FABRICATION, CELLULE DE BATTERIE, BATTERIE ET DISPOSITIF ÉLECTRONIQUE

(30) Priority: 29.03.2021 CN 202110336525
(43) Date of publication of application: 05.10.2022
(73) Proprietor: Beijing Xiaomi Mobile Software Co., Ltd., Beijing 100085 (CN)
(72) Inventor: YUAN, Xiangfei, Beijing, 100085 (CN)
(74) Representative: dompatent von Kreisler Selting Werner - Partnerschaft von Patent- und Rechtsanwälten mbB

(56) References cited:
- CN-A- 111 540 882
- AHN HYO-JIN: "Fluorine-doped carbon quantum dot interfacial layer on stockade-like etched copper foil for boosting Li-ion strage", CHEMICAL ENGINEERING JOURNAL, vol. 413, 31 October 2020 (2020-10-31), pages 1 - 9, XP055890639

## Description

### TECHNICAL FIELD

The present disclosure relates to a terminal technology field, and more particularly to an anode plate and a fabrication method thereof, a battery cell, a battery and an electronic device.

### BACKGROUND

With optimizations of various functions of electronic devices, an electrical quantity per time unit is increased to maintain normal operations of the various functions. Therefore, device makers need to increase the capacity and energy density of the battery cell to extend the endurance of an electronic device.

Chinese Patent No. CN 111 540 882 A discloses an anode plate as well as preparation method and application thereof.

An article of Ahn Hyo-Jin et al. in "Fluorine-doped carbon quantum dot interfacial layer on stockade-like etched copper foil for boosting Li-ion storage", Chemical Engineering Journal, vol. 413, 31 October 2020, pages 1-9 discloses a carbon quantum dot interfacial layer.

### SUMMARY

To solve at least one of the problems existing in the related art, an anode plate and a fabrication method thereof, a battery cell, a battery and an electronic device are provided in the present disclosure.

In a first aspect of the present disclosure, an anode plate is provided. The anode plate includes: an anode current collector; a carbon quantum dot layer, including carbon quantum dots with a size less than 10 nm, and formed on a surface of the anode current collector; and an anode silicon-containing coating layer, formed on a surface of the carbon quantum dot layer away from the anode current collector.

The anode silicon-containing coating layer includes a silicon-containing coating layer and a graphite coating layer formed on a surface of the silicon-containing coating layer, and the silicon-containing coating layer is located between the graphite coating layer and the carbon quantum dot layer.

Alternatively, the silicon-containing coating layer includes a composite layer of a silicon material and graphite.

Alternatively, the silicon-containing coating layer includes at least one member selected from the group consisting of elemental silicon, silicon oxide, and silicon carbide.

Alternatively, the anode current collector includes one member selected from the group consisting of a copper current collector, a copper composite current collector, a nickel current collector, a nickel composite current collector, a carbon current collector, a carbon fiber current collector.

In a second aspect of the present disclosure, a method for fabricating an anode plate is provided. The method includes: obtaining an anode current collector; applying a carbon quantum dot layer on a surface of the anode current collector, the carbon quantum dot layer including carbon quantum dots with a size less than 10 nm; and applying an anode silicon-containing coating layer on a surface of the carbon quantum dot layer away from the anode current collector. Applying the anode silicon-containing coating layer on the surface of the carbon quantum dot layer includes: forming a silicon-containing coating layer on the surface of the carbon quantum dot layer; and forming a graphite coating layer on a surface of the silicon-containing coating layer.

Alternatively, applying the carbon quantum dot layer on the surface of the anode current collector includes: mixing carbon quantum dots, an adhesive and a dispersant to form a first mixed slurry; and applying the first mixed slurry on the surface of the anode current collector to obtain the carbon quantum dot layer.

Alternatively, forming the silicon-containing coating layer on the surface of the carbon quantum dot layer includes: mixing graphite, a silicon material and an adhesive to form a second mixed slurry; and applying the second mixed slurry on the surface of the carbon quantum dot layer to obtain the silicon-containing coating layer.

Alternatively, the silicon material includes at least one member selected from the group consisting of elemental silicon, silicon oxide, and silicon carbide.

Alternatively, forming the graphite coating layer on the surface of the silicon-containing coating layer includes: mixing graphite and an adhesive to form a third mixed slurry; and applying the third mixed slurry on the surface of the silicon-containing coating layer to obtain the graphite coating layer.

Alternatively, the adhesive includes at least one member selected from the group consisting of polypropylene, polyethylene, sodium carboxymethyl cellulose, polyvinylidene fluoride and styrene butadiene rubber.

In a third aspect of the present disclosure, a battery cell is provided. The battery cell includes: a cathode plate; an anode plate, including the anode plate of any embodiment as described above or an anode plate obtained by the method of any embodiment as described above; and a separator film, disposed between the cathode plate and the anode plate.

In a fourth aspect of the present disclosure, a battery is provided. The battery includes the battery cell as described above.

In a fifth aspect of the present disclosure, an electronic device is provided. The electronic device includes the battery as described above.

It can be known from the embodiments of the present disclosure that the silicon material is used in the present disclosure. Based on characteristics of the silicon material having a higher specific capacity and lower discharge potential than an existing anode coating material in the lithium battery technology, an energy density of the battery cell provided with the present anode plate can be effectively improved. In addition, by providing the carbon quantum dot layer, the conductivity of the anode silicon-containing coating layer may be improved, and an interface impedance between the anode current collector and the anode silicon-containing coating layer may be reduced. Due to the carbon quantum dot layer has a good flexibility, the anode silicon-containing coating layer may have a larger volume change when it is expanded, and have an improved flexibility, which improves mechanical properties of the anode silicon-containing coating layer and reduces a risk that the anode silicon-containing coating layer detaches from the anode current collector due to the expansion of anode silicon-containing coating layer in charge and discharge processes.

It should be understood that both the above general description and the following detailed description are explanatory and illustrative only and shall not be construed to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram showing an anode plate according to an embodiment of the present disclosure.
FIG. 2 is a schematic diagram showing an anode plate according to another embodiment of the present disclosure.
FIG. 3 is a flow chart of a method for fabricating an anode plate according to an embodiment of the present disclosure.
FIG. 4 is a flow chart of a method for fabricating an anode plate according to another embodiment of the present disclosure.
FIG. 5 is a schematic diagram showing a sectional structure of a battery cell according to an embodiment of the present disclosure.
FIG. 6 is a schematic diagram showing a battery according to an embodiment of the present disclosure.
FIG. 7 is an exploded view of an electronic device according to an embodiment of the present disclosure.

### DETAILED DESCRIPTION

Embodiments of the present disclosure are described in detail below, examples of which are illustrated in the drawings. The same or similar elements are denoted by same reference numerals in different drawings unless indicated otherwise. The embodiments described as follows do not represent all embodiments consistent with the present disclosure, however, they are merely examples of devices and methods consistent with some aspects of the present disclosure as detailed in claims.

Terms used herein in the description of the present disclosure are only for the purpose of describing specific embodiments, but should not be construed to limit the present disclosure. As used in the description of the present disclosure and the appended claims, a singular element presented by "a", "said" and "the" may refer to plural elements, unless clearly indicated in the context otherwise. It should also be understood that, as used herein, the term "and/or" represents and contains any one and all possible combinations of one or more associated listed items.

It should be understood that, although terms such as "first," "second" and "third" are used herein for describing various information, these information should not be limited by these terms. These terms are only used for distinguishing the same type information from each other. For example, first information may be called second information, and the second information may be called the first information, without departing from the scope of the present disclosure. As used herein, the term "if' may be construed to mean "when" or "upon" or "in response to determining" depending on the context.

At present, with continuous development of science and technology, functions of electronic devices are continuously optimized, and battery capacity of the electronic devices needs to be improved to meet duration requirements of the electronic devices. The electronic devices generally include lithium batteries. To improve the battery capacity of the lithium battery, solutions on how to expand a volume of a battery chamber of the electronic device and how to reduce occupied spaces of other layer components in the lithium battery are considered to increase the capacity. However, using these solutions will cause a layout conflict between the battery and other electronic components in the electronic device, and have little essential improvement to the battery capacity and the battery density.

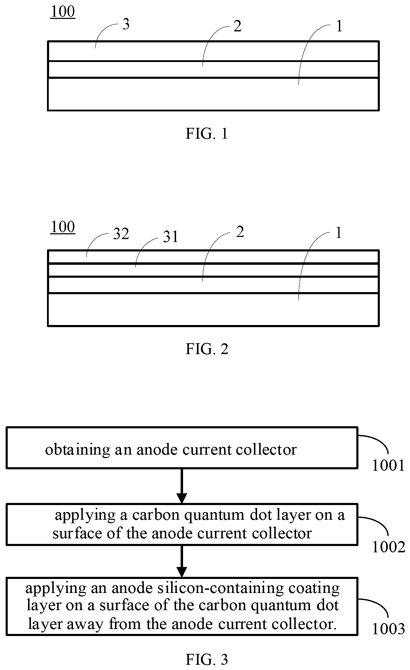

Accordingly, to meet the requirements of performance and endurance of the electronic devices, the present disclosure provides in some embodiments an anode plate 100 as shown in FIG. 1. The anode plate 100 includes an anode current collector 1, a carbon quantum dot layer 2 and an anode silicon-containing coating layer 3. The carbon quantum dot layer 2 is formed on a surface of the anode current collector 1, and the anode silicon-containing coating layer 3 is formed on a surface of the carbon quantum dot layer 2 away from the anode current collector 1. This is, the carbon quantum dot layer 2 is formed between the anode silicon-containing coating layer 3 and the anode current collector 1. The carbon quantum dot layer 2 may include carbon quantum dots with a relatively small size, for example, less than 10 nm. The anode current collector 1 may include one member selected from the group consisting of a copper current collector, a copper composite current collector, a nickel current collector, a nickel composite current collector, a carbon current collector, and a carbon fiber current collector, which may be suitably selected according to actual requirements.

It can be known from the embodiments of the present disclosure that the silicon material is used in the present disclosure. Based on characteristics of the silicon material having a higher specific capacity and lower discharge potential than an existing anode coating material in the lithium battery technology, an energy density of the battery cell provided with the anode plate 100 can be effectively improved. In addition, by forming the carbon quantum dot layer 2 between the anode silicon-containing coating layer 3 and the anode current collector 1, the conductivity of the anode silicon-containing coating layer 3 may be improved, and an interface impedance between the anode current collector 1 and the anode silicon-containing coating layer 3 may be reduced. Further, the carbon quantum dot layer 2 may include the carbon quantum dots with the relatively small size, and the anode silicon-containing coating layer 3 may have a larger volume change when it is expanded, and have an improved flexibility in charge and discharge processes, thereby improving mechanical properties of the anode silicon-containing coating layer 3 and reducing a risk that the anode silicon-containing coating layer 3 detaches from the anode current collector 1 due to the expansion of the anode silicon-containing coating layer 3 in the charge and discharge processes. Further, the carbon quantum dot layer 2 is applied on the anode current collector 1, and since the carbon quantum dots in the carbon quantum dot layer 2 have an extremely small size, a compaction density of the anode plate 100 may be increased, thereby further improving the energy density of the anode plate 100.

In addition, when a silicon-containing material is used as an anode coating material of the anode plate 100, a large number of lithium ions may be intercalated to and deintercalated from the anode silicon-containing coating layer 3, which will cause a volume change of the anode silicon-containing coating layer 3, damage silicon anode active particles of the anode silicon-containing coating layer 3, and destroy contacts of the silicon anode active particles, resulting in instability of the solid electrolyte interface film formed in a first charge and discharge process. To solve this problem, in an embodiment of the present disclosure, as shown in FIG. 2, the anode silicon-containing coating layer 3 includes a silicon-containing coating layer 31 and a graphite coating layer 32 formed on a surface of the silicon-containing coating layer 31, and the silicon-containing coating layer 31 is located between the graphite coating layer 32 and the carbon quantum dot layer 2. In this way, the graphite coating layer 32 may be used to avoid direct contact between the silicon-containing coating layer 31 and an electrolyte to avoid reaction therebetween. Further, the graphite coating layer 32 may react with the electrolyte to form a solid electrolyte interface film, which has a stronger stability compared with a solid electrolyte interface film formed by reacting the electrolyte with the silicon anode, such that a cycle life and rate performance of the battery provided with the anode plate 100 may be improved. In addition, the graphite coating layer 32 is applied to the surface of the silicon-containing coating layer 31 to better alleviate the expansion of the silicon-containing coating layer 31 compared with a single silicon-containing layer having the same thickness as the anode silicon-containing coating layer 3. The graphite coating layer 32 is relatively flexible, which may buffer lithium ion diffusion, promote uniform deintercalation of the lithium ions, and further alleviate the expansion of the silicon-containing coating layer 31. The silicon-containing coating layer 31 may include a composite layer of a silicon material and graphite, and the silicon material may include at least one member selected from the group consisting of elemental silicon, silicon oxide, and silicon carbide.

As shown in FIG. 3, the present disclosure provides a method for fabricating the anode plate 100. The method includes the following operations.

In block 1001, an anode current collector 1 is obtained.

In an embodiment, the anode current collector 1 may be one member selected from the group consisting of a copper current collector, a copper composite current collector, a nickel current collector, a nickel composite current collector, a carbon current collector, and a carbon fiber current collector, which may be suitably selected according to actual requirements.

In block 1002, a carbon quantum dot layer 2 is applied on a surface of the anode current collector 1.

In an embodiment, a first mixed slurry containing carbon quantum dots is first obtained, and the first mixed slurry is applied on the surface of the anode current collector 1 to obtain the carbon quantum dot layer 2. Specifically, the first mixed slurry may be formed by mixing the carbon quantum dots, an adhesive, a dispersant and an additive, and applied on the surface of the anode current collector 1 to obtain the carbon quantum dot layer 2. The adhesive may include at least one member selected from the group consisting of polypropylene, polyethylene, sodium carboxymethyl cellulose, polyvinylidene fluoride and styrene butadiene rubber. The dispersant may include at least one member selected from the group consisting of sodium carboxymethyl cellulose, triethylhexyl phosphoric acid, sodium lauryl sulfate, methylpentanol, a cellulose derivative and polyacrylamide. The additive may include at least one member selected from the group consisting of an organic additive and an inorganic additive.

In block 1003, an anode silicon-containing coating layer 3 is formed on the surface of the carbon quantum dot layer 2 away from the anode current collector 1.

In an embodiment, a silicon-containing coating layer 31 may be first formed on the surface of the carbon quantum dot layer 2 away from the anode current collector 1, and a graphite coating layer 32 is formed on a surface of the silicon-containing coating layer 31. The graphite coating layer 32 may alleviate an expansion of the silicon-containing coating layer 31, and react with an electrolyte to form a solid electrolyte interface film, which has a stronger stability compared with a solid electrolyte interface film formed by reacting the electrolyte with the silicon anode.

Specifically, a second mixed slurry may be formed by mixing graphite, a silicon material, an additive, a dispersant and an adhesive, and the second mixed slurry may be applied on the surface of the carbon quantum dot layer 2 to obtain the silicon-containing coating layer 31. A third mixed slurry may be formed by mixing graphite, an adhesive, a conductive agent, a dispersant and an additive, and the third mixed slurry may be applied on the surface of the silicon-containing coating layer 31 to obtain the graphite coating layer 32. The silicon material may include at least one member selected from the group consisting of elemental silicon, silicon oxide, and silicon carbide. The adhesive, added in the second mixed slurry forming the silicon-containing coating layer 31 and the third mixed slurry forming the graphite coating layer 32, may include at least one member selected from the group consisting of polypropylene, polyethylene, sodium carboxymethyl cellulose, polyvinylidene fluoride and styrene butadiene rubber. The dispersant may include at least one member selected from the group consisting of sodium carboxymethyl cellulose, triethylhexyl phosphoric acid, sodium lauryl sulfate, methylpentanol, a cellulose derivative and polyacrylamide. The additive may include at least one member selected from the group consisting of an organic additive and an inorganic additive. The adhesives, additives and dispersants included in the silicon-containing coating layer 31, the graphite coating layer 32, and the carbon quantum dot layer 2 may be the same or different.

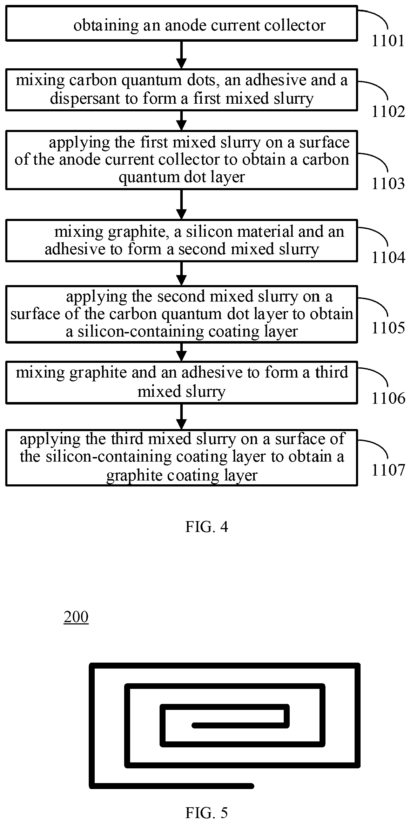

As shown in FIG. 4, a method for fabricating the anode plate 100 is further described in detail, and may include the following operations.

In block 1101, an anode current collector 1 is obtained.

In block 1102, a first mixed slurry is formed by mixing carbon quantum dots, an adhesive and a dispersant.

In block 1103, the first mixed slurry is applied on a surface of the anode current collector to obtain a carbon quantum dot layer.

In some embodiments, based on a total mass of the first mixed slurry, the first mixed slurry may have 0.1% to 5% by mass of the adhesive and 0.1% to 5% by mass of the dispersant, and a content of the carbon quantum dots may be determined according to a requirement of the carbon quantum dot concentration. In addition, the concentration of the carbon quantum dots is related to a thickness of the carbon quantum dot layer 2, and the greater the thickness, the higher the concentration of carbon quantum dots. Therefore, the concentration of the carbon quantum dots may be determined according to the thickness of the carbon quantum dot layer 2 in actual processing, and thus the content of the carbon quantum dots is determined. In other embodiments, the first mixed slurry may further include 0% to 50% by mass of an additive based on the total mass of the first mixed slurry.

In block 1104, a second mixed slurry is formed by mixing graphite, a silicon material and an adhesive.

In block 1105, the second mixed slurry is applied on a surface of the carbon quantum dot layer to obtain a silicon-containing coating layer.

In some embodiments, based on a total mass of the second mixed slurry, the second mixed slurry may have 0.1% to 45% by mass of the silicon material and 0.05% to 5% by mass of the adhesive, and the rest is the material of graphite. In other embodiments, the second mixed slurry may further include 0% to 25% by mass of an additive and 0% to 10% by mass of a dispersant based on the total mass of the second mixed slurry.

In block 1106, a third mixed slurry is formed by mixing graphite and an adhesive.

In block 1107, the third mixed slurry is applied on a surface of the silicon-containing coating layer to obtain a graphite coating layer.

In some embodiments, based on a total mass of the third mixed slurry, the third mixed slurry may have 80% to 99.9% by mass of graphite and 0.1% to 5% by mass of the adhesive. In other embodiments, the third mixed slurry may further include 0% to 5% by mass of a conductive agent, 0% to 5% by mass of a dispersant and 0% to 20% by mass of an additive.

As shown in FIG. 5, the present disclosure provides a battery cell 200. The battery cell 200 may include a cathode plate (not shown), a separator film (not shown), and the anode plate 100 according to any one of the above embodiments. The separator film is disposed between the cathode plate and the anode plate 100. After stacking the anode plate 100, the separator film and the cathode plate, they are winded to form a winded battery cell as shown in FIG. 5. In other embodiments, the anode plate 100 may be also used for a stacked battery cell according to actual requirements.

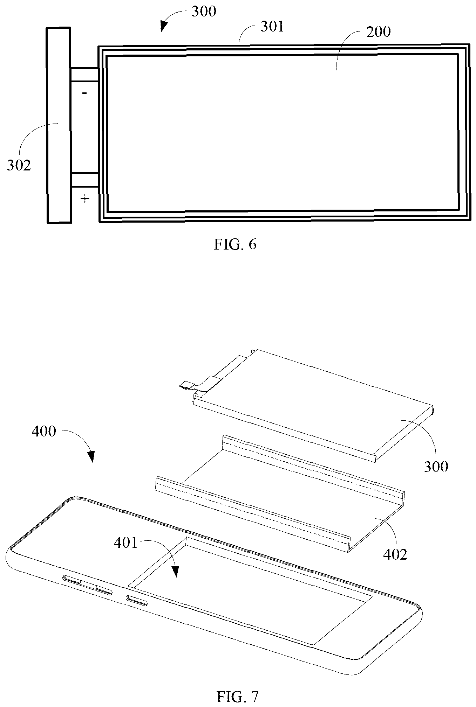

As shown in FIG. 6, the present disclosure provides a battery 300. The battery may include the battery cell 200, a housing 301 and a protection circuit board 302. The housing is used to package the battery cell 200 to protect it. The protection circuit board 302 may be electrically connected to anode and cathode tabs of the battery cell 200 for safely charging and discharging of the battery 300.

Furthermore, as shown in FIG. 7, the present disclosure provides an electronic device 400. The electronic device 400 may include a battery chamber 401, an adhesive layer 402 and the battery 300, and the battery 300 may be adhered into the battery chamber 401 through the adhesive layer 402. The electronic device 400 may be a mobile phone terminal, a tablet terminal, a wearable device, a smart furniture, an e-reader or any combination thereof.

Considering the specification and practice of the present disclosure disclosed herein, those skilled in the art may acquire other embodiments of the present disclosure. The present disclosure is intended to cover any variations, uses, or adaptive changes, which follow the general principles of the present disclosure and include common knowledge or conventional technical means in the technical field that are not disclosed in the present disclosure. It should be noted that the specification and the embodiments are only illustrative, and that the scope of the present disclosure is indicated by the appended claims.

## Claims

1. An anode plate (100), comprising:
an anode current collector (1);
a carbon quantum dot layer (2), comprising carbon quantum dots with a size less than 10 nm, and formed on a surface of the anode current collector (1); and
an anode silicon-containing coating layer (3), formed on a surface of the carbon quantum dot layer (2) away from the anode current collector (1);
wherein the anode silicon-containing coating layer (3) comprises a silicon-containing coating layer (31) and a graphite coating layer (32) formed on a surface of the silicon-containing coating layer (31), and the silicon-containing coating layer (31) is located between the graphite coating layer (32) and the carbon quantum dot layer (2).

2. The anode plate (100) according to claim 1, wherein the silicon-containing coating layer (31) comprises a composite layer of a silicon material and graphite.

3. The anode plate (100) according to claim 1 or 2, wherein the silicon-containing coating layer (31) comprises at least one member selected from the group consisting of elemental silicon, silicon oxide, and silicon carbide.

4. The anode plate (100) according to any one of claims 1 to 3, wherein the anode current collector (1) comprises one member selected from the group consisting of a copper current collector, a copper composite current collector, a nickel current collector, a nickel composite current collector, a carbon current collector, and a carbon fiber current collector.

5. A method for fabricating an anode plate (100), comprising:
obtaining (1001) an anode current collector (1);
applying (1002) a carbon quantum dot layer (2) on a surface of the anode current collector (1), the carbon quantum dot layer (2) comprising carbon quantum dots with a size less than 10 nm; and
applying (1003) an anode silicon-containing coating layer (3) on a surface of the carbon quantum dot layer (2) away from the anode current collector (1), comprising:
forming a silicon-containing coating layer (31) on the surface of the carbon quantum dot layer (2); and
forming a graphite coating layer (32) on a surface of the silicon-containing coating layer (31).

6. The method according to claim 5, wherein applying the carbon quantum dot layer (2) on the surface of the anode current collector (1) comprises:
mixing carbon quantum dots, an adhesive and a dispersant to form a first mixed slurry; and
applying the first mixed slurry on the surface of the anode current collector (1) to obtain the carbon quantum dot layer (2).

7. The method according to claim 5, wherein forming the silicon-containing coating layer (31) on the surface of the carbon quantum dot layer (2) comprises:
mixing graphite, a silicon material and an adhesive to form a second mixed slurry; and
applying the second mixed slurry on the surface of the carbon quantum dot layer (2) to obtain the silicon-containing coating layer (31).

8. The method according to claim 7, wherein the silicon material comprises at least one member selected from the group consisting of elemental silicon, silicon oxide, and silicon carbide.

9. The method according to any one of claims 5 to 8, wherein forming the graphite coating layer (32) on the surface of the silicon-containing coating layer (31) comprises:
mixing graphite and an adhesive to form a third mixed slurry; and
applying the third mixed slurry on the surface of the silicon-containing coating layer (31) to obtain the graphite coating layer (32).

10. The method according to claim 6 or 7 or 9, wherein the adhesive comprises at least one member selected from the group consisting of polypropylene, polyethylene, sodium carboxymethyl cellulose, polyvinylidene fluoride and styrene butadiene rubber.

11. A battery cell (200), comprising:
a cathode plate;
the anode plate (100) according to any one of claims 1 to 4 or an anode plate (100) obtained by the method according to any one of claims 5 to 10; and
a separator film, disposed between the cathode plate and the anode plate (100).

12. A battery (300), comprising the battery cell (200) according to claim 11.

13. An electronic device (400), comprising the battery (300) according to claim 12.

## Patentansprüche

1. Anodenplatte (100), die aufweist:
einen Anoden-Stromabnehmer (1);
eine Kohlenstoff-Quantenpunkt-Schicht (2), die Kohlenstoff-Quantenpunkte mit einer Größe von weniger als 10 nm aufweist und auf einer Fläche des Anoden-Stromabnehmers (1) ausgebildet ist; und
eine anodische Silizium enthaltende Beschichtungsschicht (3), die auf einer Fläche der Kohlenstoff-Quantenpunkt-Schicht (2) von dem Anoden-Stromabnehmer (1) entfernt ausgebildet ist;
wobei die anodische Silizium enthaltende Beschichtungsschicht (3) eine Silizium enthaltende Beschichtungsschicht (31) und eine Graphitbeschichtungsschicht (32) aufweist, die auf einer Fläche der Silizium enthaltenden Beschichtungsschicht (31) ausgebildet ist, und wobei sich die Silizium enthaltende Beschichtungsschicht (31) zwischen der Graphitbeschichtungsschicht (32) und der Kohlenstoff-Quantenpunkt-Schicht (2) befindet.

2. Anodenplatte (100) nach Anspruch 1, wobei die Silizium enthaltende Beschichtungsschicht (31) eine Verbundschicht aus einem Silizium-Material und Graphit aufweist.

3. Anodenplatte (100) nach Anspruch 1 oder 2, wobei die Silizium enthaltende Beschichtungsschicht (31) mindestens ein Element aufweist, das ausgewählt wird aus der Gruppe bestehend aus elementarem Silizium, Siliziumoxid, und Siliziumkarbid.

4. Anodenplatte (100) nach einem der Ansprüche 1 bis 3, wobei der Anoden-Stromabnehmer (1) ein Element aufweist, das ausgewählt wird aus der Gruppe bestehend aus einem Kupfer-Stromabnehmer, einem Kupferverbund-Stromabnehmer, einem Nickel-Stromabnehmer, einem Nickelverbund-Stromabnehmer, einem Kohlenstoff-Stromabnehmer, und einem Kohlenstofffaser-Stromabnehmer.

5. Verfahren zur Herstellung einer Anodenplatte (100), das umfasst:
Erhalten (1001) eines Anoden-Stromabnehmers (1);
Aufbringen (1002) einer Kohlenstoff-Quantenpunkt-Schicht (2) auf einer Fläche des Anoden-Stromabnehmers (1), wobei die Kohlenstoff-Quantenpunkt-Schicht (2) Kohlenstoff-Quantenpunkte mit einer Größe von weniger als 10 nm aufweist; und
Aufbringen (1003) einer anodischen Silizium enthaltende Beschichtungsschicht (3) auf einer Fläche der Kohlenstoff-Quantenpunkt-Schicht (2) von dem Anoden-Stromabnehmer (1) entfernt, das umfasst:
Ausbilden einer Silizium enthaltende Beschichtungsschicht (31) auf der Fläche der Kohlenstoff-Quantenpunkt-Schicht (2); und
Ausbilden einer Graphitbeschichtungsschicht (32) auf einer Fläche der Silizium enthaltende Beschichtungsschicht (31).

6. Verfahren nach Anspruch 5, wobei das Aufbringen der Kohlenstoff-Quantenpunkt-Schicht (2) auf der Fläche des Anoden-Stromabnehmers (1) umfasst:
Mischen der Kohlenstoff-Quantenpunkte, eines Klebstoffs und eines Dispergiermittels, um eine erste Mischschlämme zu bilden; und
Aufbringen der ersten Mischschlämme auf der Fläche des Anoden-Stromabnehmers (1), um die Kohlenstoff-Quantenpunkt-Schicht (2) zu erhalten.

7. Verfahren nach Anspruch 5, wobei das Ausbilden der Silizium enthaltende Beschichtungsschicht (31) auf der Fläche der Kohlenstoff-Quantenpunkt-Schicht (2) umfasst:
Vermischen von Graphit, einem Silizium-Material und einem Klebstoff, um eine zweite Mischschlämme zu bilden; und
Aufbringen der zweiten Mischschlämme auf der Fläche der Kohlenstoff-Quantenpunkt-Schicht (2), um die Silizium enthaltende Beschichtungsschicht (31) zu erhalten.

8. Verfahren nach Anspruch 7, wobei das Silizium-Material mindestens ein Element aufweist, das ausgewählt wird aus der Gruppe bestehend aus elementarem Silizium, Siliziumoxid, und Siliziumkarbid.

9. Verfahren nach einem der Ansprüche 5 bis 8, wobei das Ausbilden der Graphitbeschichtungsschicht (32) auf der Fläche der Silizium enthaltenden Beschichtungsschicht (31) umfasst:
Vermischen des Graphits und eines Klebstoffs, um eine dritte Mischschlämme zu bilden; und
Aufbringen der dritten Mischschlämme auf der Fläche der Silizium enthaltenden Beschichtungsschicht (31), um die Graphitbeschichtungsschicht (32) zu erhalten.

10. Verfahren nach Anspruch 6 oder 7 oder 9, wobei der Klebstoff mindestens ein Element aufweist, das ausgewählt wird aus der Gruppe bestehend aus Polypropylen, Polyethylen, Natriumcarboxymethylcellulose, Polyvinylidenfluorid und Styrol-Butadien-Kautschuk.

11. Batteriezelle (200), die aufweist:
eine Kathodenplatte;
eine Anodenplatte (100) nach einem der Ansprüche 1 bis 4 oder eine Anodenplatte (100), die mittels des Verfahrens nach einem der Ansprüche 5 bis 10 erhalten wird; und
eine Trennfolie, die zwischen der Kathodenplatte und der Anodenplatte (100) angeordnet ist.

12. Batterie (300), welche die Batteriezelle (200) nach Anspruch 11 aufweist.

13. Elektronische Vorrichtung (400), welche die Batterie (300) nach Anspruch 12 aufweist.

## Revendications

1. Plaque d'anode (100), comprenant :
un collecteur de courant d'anode (1) ;
une couche de points quantiques de carbone (2), comprenant des points quantiques de carbone avec une taille inférieure à 10 nm, et formée sur une surface du collecteur de courant d'anode (1) ; et
une couche de revêtement d'anode contenant du silicium (3), formée sur une surface de la couche de points quantiques de carbone (2) à l'écart du collecteur de courant d'anode (1) ;
dans laquelle la couche de revêtement d'anode contenant du silicium (3) comprend une couche de revêtement contenant du silicium (31) et une couche de revêtement de graphite (32) formée sur une surface de la couche de revêtement contenant du silicium (31), et la couche de revêtement contenant du silicium (31) est localisée entre la couche de revêtement de graphite (32) et la couche de points quantiques de carbone (2).

2. Plaque d'anode (100) selon la revendication 1, dans laquelle la couche de revêtement contenant du silicium (31) comprend une couche composite d'un matériau de silicium et de graphite.

3. Plaque d'anode (100) selon la revendication 1 ou 2, dans laquelle la couche de revêtement contenant du silicium (31) comprend au moins un élément choisi dans le groupe constitué par silicium élémentaire, oxyde de silicium et carbure de silicium.

4. Plaque d'anode (100) selon l'une quelconque des revendications 1 à 3, dans laquelle le collecteur de courant d'anode (1) comprend un élément choisi dans le groupe constitué par un collecteur de courant en cuivre, un collecteur de courant composite en cuivre, un collecteur de courant en nickel, un collecteur de courant composite en nickel, un collecteur de courant en carbone et un collecteur de courant en fibres de carbone.

5. Procédé permettant de fabriquer une plaque d'anode (100), comprenant :
l'obtention (1001) d'un collecteur de courant d'anode (1) ;
l'application (1002) d'une couche de points quantiques de carbone (2) sur une surface du collecteur de courant d'anode (1), la couche de points quantiques de carbone (2) comprenant des points quantiques de carbone avec une taille inférieure à 10 nm ; et
l'application (1003) d'une couche de revêtement d'anode contenant du silicium (3) sur une surface de la couche de points quantiques de carbone (2) à l'écart du collecteur de courant d'anode (1), comprenant :
la formation d'une couche de revêtement contenant du silicium (31) sur la surface de la couche de points quantiques de carbone (2) ; et
la formation d'une couche de revêtement de graphite (32) sur une surface de la couche de revêtement contenant du silicium (31).

6. Procédé selon la revendication 5, dans lequel l'application de la couche de points quantiques de carbone (2) sur la surface du collecteur de courant d'anode (1) comprend :
le mélange de points quantiques de carbone, d'un adhésif et d'un dispersant pour former une première bouillie mélangée ; et
l'application de la première bouillie mélangée sur la surface du collecteur de courant d'anode (1) pour obtenir la couche de points quantiques de carbone (2).

7. Procédé selon la revendication 5, dans lequel la formation de la couche de revêtement contenant du silicium (31) sur la surface de la couche de points quantiques de carbone (2) comprend :
le mélange de graphite, d'un matériau de silicium et d'un adhésif pour former une deuxième bouillie mélangée ; et
l'application de la deuxième bouillie mélangée sur la surface de la couche de points quantiques de carbone (2) pour obtenir la couche de revêtement contenant du silicium (31).

8. Procédé selon la revendication 7, dans lequel le matériau de silicium comprend au moins un élément choisi dans le groupe constitué par silicium élémentaire, oxyde de silicium et carbure de silicium.

9. Procédé selon l'une quelconque des revendications 5 à 8, dans lequel la formation de la couche de revêtement de graphite (32) sur la surface de la couche de revêtement contenant du silicium (31) comprend :
le mélange de graphite et d'un adhésif pour former une troisième bouillie mélangée ; et
l'application de la troisième bouillie mélangée sur la surface de la couche de revêtement contenant du silicium (31) pour obtenir la couche de revêtement de graphite (32).

10. Procédé selon la revendication 6 ou 7 ou 9, dans lequel l'adhésif comprend au moins un élément choisi dans le groupe constitué par polypropylène, polyéthylène, carboxyméthylcellulose de sodium, polyfluorure de vinylidène et caoutchouc butadiène-styrène.

11. Cellule de batterie (200), comprenant :
une plaque de cathode ;
la plaque d'anode (100) selon l'une quelconque des revendications 1 à 4 ou une plaque d'anode (100) obtenue par le procédé selon l'une quelconque des revendications 5 à 10 ; et
un film séparateur, disposé entre la plaque de cathode et la plaque d'anode (100).

12. Batterie (300), comprenant la cellule de batterie (200) selon la revendication 11.

13. Dispositif électronique (400), comprenant la batterie (300) selon la revendication 12.
